# NEUE EUROPÄISCHE PATENTSCHRIFT

(11) **EP 0 675 926 B2**
(45) Veröffentlichungstag und Bekanntmachung des Hinweises auf die Entscheidung über den Einspruch: **13.09.2006**
(45) Hinweis auf die Patenterteilung: 08.04.1998
(21) Anmeldenummer: 94902758.5
(22) Anmeldetag: 10.12.1993
(51) Int. Cl.: C09D 5/44

(54) **VERFAHREN ZUR HERSTELLUNG VON ELEKTROTAUCHLACKEN**
PROCESS FOR THE PREPARATION OF ELECTRO-DIP VARNISH
PROCEDE DE PREPARATION DU VERNIS DE TREMPAGE ELECTROPHORETIQUE

(30) Priorität: 24.12.1992 DE 4244209
(43) Veröffentlichungstag der Anmeldung: 11.10.1995
(73) Patentinhaber: BASF Coatings Aktiengesellschaft, 48165 Münster (DE)
(72) Erfinder: ECKERT, Karin, D-48565 Steinfurt (DE); BUDER, Uwe, D-48301 Nottuln (DE); PIONTEK, Susanne, D-48165 Münster (DE); NEUMANN, Margret, D-48151 Münster (DE); HEIMANN, Ulrich, D-48165 Münster (DE)
(86) Internationale Anmeldenummer: PCT/EP1993/003500
(87) Internationale Veröffentlichungsnummer: WO 1994/014901

(56) Entgegenhaltungen:
- WO-A-93/06263
- DE-A- 2 248 836
- DE-A- 2 923 589
- US-A- 3 476 668
- LUBA-print information, August 1980
- Patent Abstracts of Japan, Sect. C., no. 689, vol. 14, no. 8, p. 147, 15.02.90 & JP-A-1 298 198
- Teilübersetzung der japanischen Patentschrift JP-A-1 298 198
- Karsten Lackrohstoff-Tabellen, 8. Aufl., 1987, S. 627-33
- Datenblatt fuer Forbest MF II

## Beschreibung

Die Erfindung betrifft ein Verfahren zur Herstellung von kathodisch abscheidbaren wäßrigen Elektrotauchlacken und ein Verfahren zur Beschichtung elektrisch leitfähiger Substrate, bei dem
(1) das Substrat in einen kathodisch abscheidbaren, wäßrigen Elektrotauchlack eingetaucht wird
(2) das Substrat als Kathode geschaltet wird
(3) durch Gleichstrom ein Film auf dem Substrat abgeschieden wird
(4) das beschichtete Substrat aus dem Elektrotauchlack entfernt wird und
(5) der abgeschiedene Lackfilm eingebrannt wird.

Kathodisch abscheidbare, wäßrige Elektrotauchlacke und das obenbeschriebene Verfahren zur Beschichtung elektrisch leitfähiger Substrate sind bekannt (vergl. z.B. EP-B-301 293, DE-A-35 18 732, DE-A-35 18 770, EP-A-4090, EP-A-12 463, EP-A-262 069, US-A-3,799,854, US-A-4,031,050, US-A-4,252,703, US-A-4,332,711, DE-A-31 08 073, DE-A-27 01 002, EP-A-59 895, DE-A-31 03 642 und DE-A-32 15 891). Die kathodische Elektrotauchlackierung mit kathodisch abscheidbaren, wäßrigen Elektrotauchlacken hat sich als Verfahren zur automatischen Lackierung von Massengütem, insbesondere von Automobilkarosserien, durchgesetzt. Vorteile der Elektrotauchlackierung mit kathodisch abscheidbaren, wäßrigen Elektrotauchlacken liegen beispielsweise in der Umweltfreundlichkeit (Wasser als Lösemittel), sehr guten Materialausbeute und hohen Zuverlässigkeit bei sehr weitgehender Automatisierung der Anlagen.

Dervorliegenden Erfindung liegt die Aufgabe zugrunde, ein neues Verfahren zur Herstellung von kathodisch abscheidbaren, wäßrigen Elektrotauchlacken bereitzustellen, das kathodisch abscheidbare, wäßrige Elektrotauchlacke liefert, die Lackschichten mit verbesserten Eigenschaften, insbesondere hinsichtlich der Ausbildung von Läufermarkierungen (runouts, boilouts), Wassertropfenempfindlichkeit und Brückenbildung (bridging) liefern.

Störende Läufermarkierungen können entstehen, wenn während des Einbrennprozesses Elektrotauchlack beispielsweise aus Nähten austritt und auf der beschichteten Fläche abläuft. Beim Vorliegen von kompliziert geformten Substraten (z.B. V-förmige Bleche) kann der austretende Elektrotauchlack in Form von Brücken erstarren. In diesem Fall kommt es zu störenden Brückenbildungen. Wenn vor dem Einbrennprozeß Wasser oder verdünnter Elektrotauchlack auf den oberflächlich getrockneten aber noch nicht eingebrannten Elektrotauchlackfilm tropft, sind bei Elektrotauchlackfilmen mit hoher Wassertropfenempfindlichkeit nach dem Einbrennen störende Wassertropfenmarkierungen zu sehen.

Oft wird versucht, die obenbeschriebenen Störungen durch Zugabe von Tensiden zu beseitigen. Die Zugabe von Tensiden hat jedoch in vielen Fällen neue störende Nebenwirkungen, wie z.B. Schaumbildung und/oder Enthaftungen von überlackierten Schichten zur Folge.

Der vorliegenden Erfindung liegt insbesondere die Aufgabe zugrunde, die obenbeschriebenen Störungen möglichst ohne Erzeugung von neuen störenden Nebenwirkungen, wie z.B. Schaumbildung und/oder Enthaftung von überlackierten Schichten zu beseitigen.

Diese Aufgabe wird überraschenderweise dadurch gelöst, daß zu an sich bekannten kathodisch abscheidbaren, wäßrigen Elektrotauchlacken Teilchen aus Wachs, die einen Durchmesser von 1 bis 20 µm aufweisen, mit Hilfe von Pigmentpasten zugegeben werden.

Es ist bevorzugt, die Teilchen aus Wachs in Pulverform bzw. in Form einer Dispersion in Wasser, in einem wassermischbaren organischen Lösemittel oder in einer Mischung aus wassermischbaren organischen Lösemitteln in die Pigmentpaste einzuarbeiten.

Im Zusammenhang mit der vorliegenden Erfindung werden unter "Wachs" alle natürlichen und künstlich gewonnenen Stoffe verstanden, die folgende Eigenschaften aufweisen:
1. Bei 20°C knetbar, fest bis brüchig hart.
2. Grob- bis feinkristallin, durchscheinend bis opak, jedoch nicht glasartig.
3. Über 40°C ohne Zersetzung schmelzend.
4. Schon wenig oberhalb des Schmelzpunktes verhältnismäßig niedrigviskos.
5. Stark temperaturabhängig in Konsistenz und Löslichkeit.
6. Unter leichtem Druck polierbar.

Erfüllt ein Stoff mehr als eine dieser Eigenschaften nicht, ist er kein "Wachs" mehr im Sinne dieser Erfindung (vgl. Ullmanns Enzyklopädie der technischen Chemie; 4. neubearbeitete und erweiterte Auflage; Verlag Chemie; Weinheim; Deerfield Beach, Florida; Basel, 1983, Seite 3).

Gemäß der vorliegenden Erfindung werden vorzugsweise ggf. modifizierte Polyolefinwachse, besonders bevorzugt ggf. modifizierte Polyethylen- oder Polypropylenwachse mit einem Schmelzpunkt, der vorzugsweise unter 150°C, besonders bevorzugt unter 140°C, ganz besonders unter 115°C liegt. Ganz besonders bevorzugt werden ggf. modifizierte Polyethylenwachse mit einem Schmelzpunkt von unter 150°C, besonders bevorzugt unter 140°C, ganz besonders bevorzugt unter 115°C in Form von Teilchen, die einen Durchmesser von 1 bis 20 µm aufweisen, eingesetzt.

Die obenbeschriebenen Teilchen aus Wachs sind im Handel erhältlich (Polyethylen- und Polypropylenwachse Hoechst, Hoechst AG; Vestowax, Chemische Werke Hüls; Polywax, Petrolite Corporation, USA; Hi-Wax, Mitsui Petrochemical Industries, Japan; LANCO-WAX, Langer + Co., BRD; FORBEST, Lucas Meyer GmbH & Co. KG, BRD; DEUTERON, W.O.C. Schöner GmbH, BRD usw.).

Der erfindungsgemäße Zusatz von Teilchen aus Wachs zu kathodisch abscheidbaren wäßrigen Elektrotauchlakken wirkt sich besonders vorteilhaft aus, wenn der Elektrotauchlack 0,01 bis 5,00, vorzugsweise 0,05 bis 1,00, besonders bevorzugt 0,05 bis 0,50 Gew.-% Wachs, bezogen auf den Gesamtteststoffgehalt des Elektrotauchlackes enthält.

Die obenbeschriebenen Teilchen aus Wachs werden vorzugsweise in kathodisch abscheidbaren, wäßrigen Elektrotauchlacken eingesetzt, die entweder ein kationisches, aminmodifiziertes Epoxidharz oder eine Mischung aus kationischen, aminmodifizierten Epoxidharzen als Bindemittel und ein blockiertes Polyisocyanat oder eine Mischung aus blockierten Polyisocyanaten als Vernetzungsmittel und/oder ein durch Umsetzung mit einem teilblockierten Polyisocyanat selbstvernetzbar gemachtes, kationisches, aminmodifiziertes Epoxidharz oder eine Mischung aus solchen selbstvernetzbaren kationischen, aminmodifizierten Epoxidharzen enthalten. Die obenbeschriebenen Teilchen aus Wachs werden besonders bevorzugt in kathodisch abscheidbaren, wäßrigen Elektrotauchlacken eingesetzt, die ein kationisches, aminmodifiziertes Epoxidharz oder eine Mischung aus kationischen, aminmodifizierten Epoxidharzen als Bindemittel und ein blockiertes Polyisocyanat oder eine Mischung aus blockierten Polyisocyanaten als Vernetzungsmittel enthalten.

Kationische, aminmodifizierte Epoxidharze werden in großem Umfang als Bindemittel in kathodisch abscheidbaren, wäßrigen Elektrotauchlacken eingesetzt (vgl. beispielsweise DE-A-35 18 732, DE-A-35 18 770, EP-A-40990 und EP-A-12 463). Kationische, aminmodifizierte Epoxidharze können hergestellt werden, indem gegebenenfalls modifizierte Polyepoxide mit Aminen umgesetzt werden und die so erhaltenen Umsetzungsprodukte anschließend mit Säuren wenigstens teilweise neutralisiert und in Wasser dispergiert werden. Als Polyepoxide werden vorzugsweise aus Polyphenolen, insbesondere Bisphenol-A und Epihalohydrinen, insbesondere Epichlorhydrinen hergestellte Polyglycidylethervon Polyphenolen eingesetzt. Diese Polyepoxide können vor oder nach der Umsetzung mit einem oder mehreren Aminen modifiziert werden, indem ein Teil der reaktionsfähigen Gruppen mit einer modifizierenden Verbindung umgesetzt wird. Als Beispiele für modifizierende Verbindungen werden genannt:
a) Carboxylgruppenhaltige Verbindungen, wie gesättigte oder ungesättigte Monocarbonsäuren (z.B. Benzoesäure, Leinölfettsäure, 2-Ethylhexansäure, Versaticsäure), aliphatische, cycloaliphatische und/oder aromatische Dicarbonsäuren verschiedener Kettenlänge (z.B. Adipinsäure, Sebacinsäure, Isophthalsäure oder dimere Fettsäuren), Hydroxialkylcarbonsäuren (z.B. Milchsäure, Dimethylolpropionsäure) sowie carboxylgruppenhaltige Polyester oder
b) aminogruppenhaltige Verbindungen, wie Diethylamin oder Ethylhexylamin oder Diamine mit sekundären Aminogruppen, z.B. N,N'-Dialkylalkylendiamine, wie Dimethylethylendiamin, N,N'-Dialkyl-polyoxialkylenamine, wie N, N'-dimethylpolyoxipropylendiamin, cyanalkylierte Alkylendiamine, wie Bis-N,N'-Cyanethyl-ethylendiamin, cyanalkylierte Polyoxialkylenamine, wie Bis-N,N'-Cyanethylpolyoxipropylendiamin, Polyaminoamide, wie z.B. Versamide, insbesondere endständige Aminogruppen enthaltende Umsetzungsprodukte aus Diaminen (z.B. Hexamethylendiamin), Polycarbonsäuren, insbesondere Dimerfettsäuren und Monocarbonsäuren, insbesondere Fettsäuren, oder das Umsetzungsprodukt von einem Mol Diaminohexan mit zwei Molen Monoglycidylether oder Monoglycidylester, speziell Glycidylester α-verzweigter Fettsäuren, wie der Versaticsäure, oder
c) hydroxylgruppenhaltige Verbindungen, wie Neopentylglykol, Bis-ethoxiliertes Neopentylglykol, Hydroxipivalinsäureneopentylglykolester, Dimethylhydantoin-N-N'-diethanol, Hexandiol-1,6, Hexandiol-2,5, 1,4-Bis(hydroximethyl)cyclohexan, 1,1-Isopropyliden-bis-(p-phenoxi)-2-propanol, Trimethylolpropan, Pentaerythrit oder Aminoalkohole, wie Triethanolamin, Methylketimine, wie Aminomethylpropandiol-1,3-methyl-isobutylketimin oder Tris-(hydroximethyl)-aminomethan-cyclohexanonketimin sowie auch Polyglykolether, Polyesterpolyole, Polyetherpolyole, Polycaprolactonpolyole, Polycaprolactampolyole verschiedener Funktionalität und Molekulargewichte oder
d) gesättigte oder ungesättigte Fettsäuremethylester, die in Gegenwart von Natriummethylat mit Hydroxylgruppen der Epoxidharze umgeestert werden.

Das gegebenenfalls modifizierte Polyepoxid wird - wie bereits ausgeführt - vor oder nach einer eventuellen Umsetzung mit modifizierenden Verbindungen mit einem oder mehreren Aminen umgesetzt. Das bzw die Amine sollten in Wasser lösliche Verbindungen sein. Beispiele für einsetzbare Amine sind Mono- und Dialkylamine wie zum Beispiel Methylamin, Ethylamin, Propylamin, Butylamin, Dimethylamin, Diethylamin, Dipropylamin, Methylbutylamin usw., Alkanolamine, wie z.B. Methylethanolamin, Diethanolamin usw. und Dialkylaminoalkylamine, wie z.B. Dimethylaminoethylamin, Diethylaminopropylamin, Dimethylaminopropylamin usw. Die Polyepoxide werden vorzugsweise mit sekundären Aminen bzw. mit einer Mischung aus sekundären Aminen umgesetzt.

Die mit den Aminen umgesetzten Polyepoxide werden mit einer Säure, wie z.B. Borsäure, Ameisensäure, Milchsäure, Essigsäure usw. wenigstens teilweise protoniert und in Wasser dispergiert. Die so erhaltene Bindemitteldispersion kann dann zur Herstellung von Elektrotauchlacken verwendet werden.

Selbstvernetzbare aminmodifizierte Epoxidharze können hergestellt werden, indem die obenbeschriebenen Umsetzungsprodukte aus Polyepoxiden, ggf. modifizierenden Verbindungen und Aminen noch mit mindestens einem teilblockierten Polyisocyanat, vorzugsweise mit mindestens einem halbblockierten Diisocyanat umgesetzt werden. Derartige Bindemittel sind dem Fachmann gut bekannt und müssen daher hier nicht näher beschrieben werden.

Bevorzugt eingesetzte kationische, aminmodifizierte Epoxidharze sind herstellbar, indem Epoxidverbindungen, die herstellbar sind durch Umsetzung von
(a) einer Diepoxidverbindung oder eines Gemisches von Diepoxidverbindungen mit einem Epoxidäquivalentgewicht unter 2000 mit
(b) einer unter den gegebenen Reaktionsbedingungen gegenüber Epcxidgruppen monofunktionell reagierenden, eine Phenol- oder Thiolgruppe enthaltenden Verbindung oder eines Gemisches solcher Verbindungen,
wobei die Komponenten (a) und (b) in einem Molverhältnis von 10:1 bis 1:1, bevorzugt 4:1 bis 1,5:1, eingesetzt werden und die Umsetzung der Komponente (a) mit der Komponente (b) bei 100 bis 190°C gegebenenfalls in Anwesenheit eines Katalysators durchgeführt wird (vgl. DE-OS-35 18 770), wie oben beschrieben mit Aminen umgesetzt und in Wasser dispergiert werden.

Ebenfalls bevorzugt eingesetzte kationische, aminmodifizierte Epoxidharze sind herstellbar, indem Epoxidverbindungen, die herstellbar sind durch eine bei 100 bis 195°C, gegebenenfalls in Anwesenheit eines Katalysators durchgeführten, durch einen monofunktionell reagierenden Starter, der entweder eine alkoholische OH-Gruppe, eine phenolische OH-Gruppe oder eine SH-Gruppe trägt, initiierten Polyaddition einer Diepoxidverbindung und/oder eines Gemisches von Diepoxidverbindungen, gegebenenfalls zusammen mit mindestens einer Monoepoxidverbindung, zu einem Epoxidharz, in dem Diepoxidverbindung und Starter in einem Molverhältnis von größer 2:1 bis 10:1 eingebaut sind (vgl. DE-OS-35 18 732), wie oben beschrieben mit Aminen umgesetzt und in Wasser dispergiert werden.

Auch der Einsatz von blockierten Polyisocyanaten als Vernetzungsmittel in kathodisch abscheidbaren wäßrigen Elektrotauchlacken ist schon lange Zeit bekannt und gebräuchlich (vgl. die obenzitierten Patentdokumente). Blockierte Polyisocyanate sind Polyisocyanate, in denen die Isocyanatgruppen mit einem Blockierungsmittel (z.B. Alkohol, Phenol, Amin, Oxim usw.) umgesetzt worden sind, wobei das Blockierungsmittel so ausgewählt worden ist, daß die blokkierten Polyisocyanatgruppen mit den im kationischen aminmodifizierten Epoxidharz enthaltenen Hydroxyl- und Aminogruppen erst bei höheren Temperaturen, in der Regel erst ab etwa 90° reagieren. Als Polyisocyanate können alle für Lacke geeigneten Polyisocyanate eingesetzt werden. Beispiele für einsetzbare Polyisocyanate sind Diisocyanate wie Hexamethylendiisocyanat, 2,4-Toluylendiisocyanat, 2,6-Toluylendiisocyanat, Isophorondiisocyanat usw. sowie Triisocyanate, wie zum Beispiel trimerisiertes Hexamethylendiisocyanat und trimerisiertes Isophorondiisocyanat. Als Polyisocyanate können auch Mischungen aus Polyisocyanaten und Präpolymere, insbesondere Präpolymere aus Polyolen und Polyisocyanaten eingesetzt werden. Als einsetzbare Blockierungsmittel werden beispielhaft genannt: aliphatische, cycloaliphatische und aromatische Alkylmonoalkohole, wie z.B. Methyl-, Ethyl-, Propyl-, Butyl-, Amyl-, Hexyl-, Heptyl-, Octyl-, Nonyl-, 3,3,5-Trimethylhexyl-, Decyl- und Laurylalkohol sowie Cyclopentanol und Cyclohexanol und Phenylcarbinol und Methylphenylcarbinol. Weitere einsetzbare Blockierungsmittel sind Hydroxylamine, wie z.B. Ethanolamin. Oxime, wie z.B. Methylethylketonoxim, Acetonoxim und Cyclohexanonoxim und Amine, wie z.B. Dibutylamin und Diisopropylamin. Die obengenannten Polyisocyanate können auch zur Herstellung der selbstvernetzenden kationischen aminmodifizierten Epoxidharze eingesetzt werden. Dazu ist es lediglich notwendig, die Polyisocyanate so zu blockieren, daß im statistischen Mittel pro Molekül eine Isocyanatgruppe unblockiert bleibt und diese teilblockierten Polyisocyanate dann mit dem aminmodifizierten Epoxidharz umzusetzen.

Die Elektrotauchlacke enthalten neben den obenbeschriebenen Komponenten auch noch Pigmente und/oder Füllstoffe und können organische Lösemittel, Antioxidantien, oberflächenaktive Mittel usw. enthalten. Die Einarbeitung von Pigmenten, Füllstoffen und weiteren Additiven, insbesondere die erfindungsgemäß eingesetzten Teilchen aus Wachs, erfolgt mit Hilfe vcn Pigmentpasten. Diese Vorgehensweise und die Herstellung von Pigmentpasten sind dem Fachmann gut bekannt (vgl. z.B. die obenzitierten Patentdokumente sowie D.H. Parker, Principles of Surface Technology, Intersience Publishers, New York (1965); R. L. Yates, Electropainting, Robert Draper Ltd., Teddington/England (1966) und H.F. Payne, Organic Coating Technology, Band 2, Wiley and Sons, New York (1961).

Der Feststoffgehalt der Elektrotauchlacke beträgt vorzugsweise 7 bis 35 Gew.-%, besonders bevorzugt 12 bis 25 Gew.-%. Das Gewichtsverhältnis zwischen dem kationischen, aminmodifizierten Epoxidharz und dem blockierten Polyisocyanat liegt in der Regel zwischen 20 und 1,5, vorzugsweise zwischen 5 und 2,5.

Mit den nach dem erfindungsgemäßen Verfahren hergestellten Elektrotauchlaken können im Prinzip alle elektrisch leitenden Substrate beschichtet 10 werden. Die Elektrotauchlacke werden insbesondere für die Beschichtung von Automobilkarosserien eingesetzt. Die Elektrotauchlacke können auch durch Spritzen, Streichen, Rakeln usw. auf elektrisch leitende und auch auf elektrisch nicht leitende Substrate appliziert und eingebrannt werden.

Die Erfindung wird in den folgenden Beispielen näher erläutert. Alle Angaben über Teile und Prozentsätze sind Gewichtsangaben, falls nicht ausdrücklich etwas anderes festgestellt wird.

### 1 Herstellung von Vernetzungsmitteln

### 1.1 Vernetzungsmittel 1

In einem Reaktor, der mit einem Rührer, Rückflußkühler, Innenthermometer und Inertgaseinleitung ausgestattet ist, werden 1.133 g Toluylendiisocyanat (Mischung aus etwa 80 % 2,4- und 20 % 2,6-Isomeren) und 356 g Methylisobutylketon unter Stickstoffatmosphäre vorgelegt. Man gibt 0,7 g Dibutylzinndilaurat zu und trägt innerhalb von 4 Stunden 290 g Trimethylolpropan in Form kleiner Portionen in gleichen Zeitabständen ein. Die Kühlung wird so einreguliert, daß die Temperatur der Reaktionsmischung nicht über 45°C steigt.

30 Minuten nach Zugabe der letzten Portion Trimethylolpropan wird ein NCO-Äquivalentgewicht von 217 gemessen (bezogen auf Festanteile). Unter weiterer Kühlung läßt man nun innerhalb von einer Stunde 722 g n-Propylglykol zutropfen. Am Ende der Zugabe ist die Temperatur auf 86°C angestiegen. Man erwärmt nun auf 100°C und läßt eine weitere Stunde nachreagieren. Bei der anschließenden Kontrolle sind keine NCO-Gruppen mehr nachweisbar. Man kühlt nun ab und verdünnt mit 500 g Methylisobutylketon. Die Lösung dieses Polyurethanvemetzungsmittels hat einen Feststoffgehalt von 69,8 % (1 Std. bei 130°C gemessen).

### 1.2 Vernetzungsmittel 2

In einem Reaktor, wie er im vorstehenden Beispiel beschrieben ist, werden unter Stickstoffatmosphäre 1.146 g trimerisiertes Hexamethylendiisocyanat mit einem NCO-Äquivalentgewicht von 191 ("Basonat PLR 8638", Fa. BASF) und 339 g Methylisobutylketon unter Rühren auf 50°C erwärmt. Während 4 Std. werden nun 774 g Di-n-butylamin zugetropft. Die Temperatur wird dabei durch Kühlung unter 55°C gehalten. Die Vemetzungsmittellösung wird anschließend gekühlt und mit weiteren 141 g Methylisobutylketon verdünnt. Der Feststoffgehalt liegt bei 79,5 % (1 Std. bei 130°C gemessen).

### 2 Herstellung einer Bindemitteldispersion

In einem Reaktor werden 1698 Teile Epoxidharz auf Basis Bisphenol A mit einem EEW (Epoxidäquivalentgewicht) von 490 zusammen mit 227 Teilen Dodecylphenol und 101 Teilen Xylol unter Stickstoffatomosphäre auf 105°C aufgeheizt. Sobald die Schmelze klar ist, werden durch azeotrope Rückflußdestillation im Vakuum Restwasserspuren mit Hilfe eines Wasserabscheiders innerhalb von 20 Min. entfernt. Sodann heizt man auf 130°C auf und gibt 3 Teile N,N-Dimethylbenzylamin zu. Man hält bei dieser Temperatur bis das EEW einen Wert von 1100 erreicht hat. Man gibt nun 126 Teile Butylglykol, 127 Teile Diethanolamin und 223 Teile Xylol zu und kühlt auf 90°C ab. Eine Stunde später verdünnt man mit 125 Teilen Propylenglykolphenylether und 317 Teilen isobutanol und kühlt auf 60°C ab. Danach gibt man 40 Teile N,N-Dimethylaminopropylamin zu, erwärmt auf 90°C und hält 2 Std. bei dieser Temperatur. Anschließend kühlt man auf 70°C ab und gibt 280 Teile Plastilit 3060 (Polypropylenglykolverbindung, Fa. BASF), 805 Teile Vernetzungsmittel 1 (Punkt 1.1) und 704 Teile Vernetzungsmittel 2 (vgl. Punkt 1.2) zu, homogenisiert 20 Min. lang und überführt die Harzmischung in ein Dispergiergefäß. Dort gibt man 91,7 Teile Milchsäure (88 %ig) zu und verdünnt unter Rühren portionsweise mit 2112 Teilen entionisiertem Wasser. Anschließend wird 20 Min. lang homogenisiert bevor mit weiteren 3000 Teilen entionisiertem Wasser in kleinen Portionen weiterverdünnt wird.

Durch Destillation im Vakuum werden die flüchtigen Lösemittel entfernt und anschließend mengengleich durch entionisiertes Wasser ersetzt. Die Dispersion hat folgende Kennzeichen:

| | |
|---|---|
| Feststoffgehalt | 35 % (1 Std. bei 130°C) |
| Basengehalt | 0,570 Milliäquivalente/g Festkörper |
| Säuregehalt | 0,226 " " |
| pH | 6,2 |

### 3 Herstellung eines Reibharzes

In einem mit Rührwerk, Innenthermometer, Stickstoffeinlaß und Wasserabscheider mit Rückflußkühler ausgestatteten Reaktor werden 30,29 Teile eines Epoxidharzes auf Basis Bisphenol A mit einem Epoxidäquivalentgewicht (EEW) von 188, 9,18 Teile Bisphenol A, 7,04 Teile Dodecylphenol und 2,37 Teile Butylglykol vorgelegt. Man heizt auf 110°C auf, fügt 50 g Xylol zu und destilliert dieses unter schwachem Vakuum zusammen mit möglichen Wasserspuren wieder ab. Sodann gibt man 0,07 Teile Triphenylphoshin zu und heizt auf 130°C auf. Nach exothermer Wärmetönung auf 150°C läßt man bei 130°C noch 1 h nachreagieren.

Das EEW der Reaktionsmischung liegt dann bei 860. Man kühlt und gibt währenddessen 9,91 Teile Butylglykol und 17,88 Teile eines Polypropylenglykoldiglycidylethers mit EEW 333 (DER 732, Dow Chemical) zu. Bei 90°C werden 4,23 Teile 2-2'-Aminoethoxyethanol und 10 Min. später 1,37 Teile N,N-Dimethylaminopropylamin zugefügt. Die Reaktionsmischung wird nach kurzzeitiger Exothermie noch für 2 h bei 90°C gehalten, bis die Viskosität konstant bleibt, und anschließend wird mit 17,66 Teilen Butylglykol verdünnt. Das Harz hat einen Festkörper von 69,8 % (gemessen 1 h bei 130°C).

### 4 Herstellung von Pigmentpasten

### 4.1 Herstellung einer Pigmentpaste ohne Teilchen aus Wachs

60 Gewichtsteile entionisiertes Wasser, 1,2 Gewichtsteile Essigsäure (90 %ig) und 50 Gewichtsteile des gemäß Punkt 3. hergestellten Reibharzes werden vorgemischt. Dann gibt man 1 Gewichtsteil Ruß, 4 Gewichtsteile basisches Bleisilikat, 15 Gewichtsteile Aluminiumsilikat, z.B. ASP 200, Langer + Co., 66 Gewichtsteile Titandioxid und 4 Gewichtsteile Dibutylzinnoxid zu und mischt 30 Minuten lang unter einem schnellaufenden Dissolverrührwerk. Anschließend wird die Mischung in einer Laborkleinmühle während 1 bis 1,5 h bis zu einer Hegmann-Feinheit von kleiner 12 µm dispergiert und mit weiterem Wasser ggf. auf die gewünschte Verarbeitungsviskosität eingestellt.

### 4.2 Herstellung einer Pigmentpaste mit Teilchen aus Wachs

Es wird wie unter Punkt 4.1 beschrieben verfahren mit der einzigen Ausnahme, daß zusätzlich 0,5 Gewichtsteile pulverförmiges Paraffinwachs (Forbest MF II, Lucas Meyer GmbH & Co. KG, Hamburg) eingewogen werden.

### 5 Zubereitung von Elektrotauchlackbädern

### 5.1 Zubereitung eines Elektrotauchlackbades ohne Teilchen aus Wachs

397 Gewichtsteile der gemäß Punkt 2. hergestellten Bindemitteldispersion werden mit 460 Gewichtsteilen entionisiertem Wasser und mit 3 Gewichtsteilen 10 %iger Essigsäure verdünnt. In die so verdünnte Bindemitteldispersion werden 140 Gewichtsteile der gemäß Punkt 4.1 hergestellten Pigmentpaste unter Rühren eingetragen. Man läßt das Elektrotauchlackbad 5 Tage bei Raumtemperatur altern.

### 5.2 Zubereitung eines Elektrotauchlackbades mit Teilchen aus Wachs

Es wird wie unter Punkt 5.1 beschrieben verfahren mit der einzigen Ausnahme, daß anstelle von 140 Gewichtsteilen der gemäß Punkt 4.1 hergestellten Pigmentpaste 140 Gewichtsteile der gemäß Punkt 4.2 hergestellten Pigmentpaste in die verdünnte Bindemitteldispersion eingetragen werden.

### 6 Herstellung von zu beschichtenden Prüfkörpern

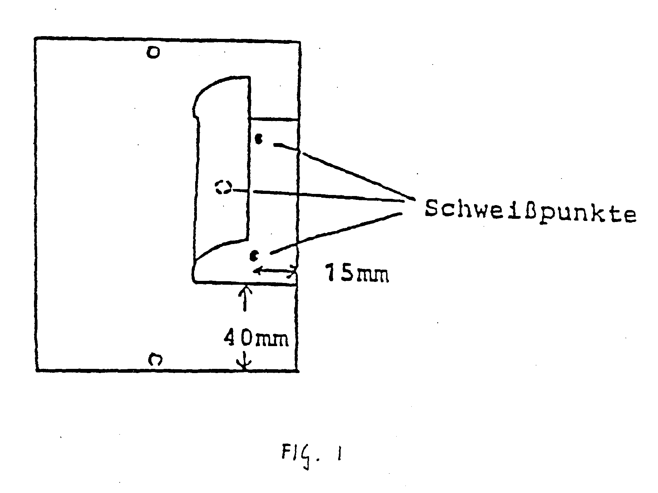

Ein phosphatiertes Normprüfblech wird mit einer Blechschere auf 10,5 x 9,5 cm halbiert. Eine der Blechhälften wird mit der 10,5 cm langen Seite nach unten in ein konisches Dornbiegegerät so gespannt, daß das Ende des Bleches am kleinsten Durchmesser liegt. Dann wird das Blech um den konischen Dom um 90° gebogen. Das gebogene Blech wird entsprechend der Zeichnung 1/1 mittels 3 Schweißpunkten auf eine zweite phospatierte Normtafel (10,5 x 19,5 cm) so befestigt, daß die Prüfseiten aufeinanderliegen.

### 7 Abscheidung von Lackfilmen auf den gemäß Punkt 6 hergestellten Prüfkörpern

Je ein gemäß Punkt 6 hergestellter Prüfkörper wird in das gemäß Punkt 5.1 bzw in das gemäß Punkt 5.2 hergestellte Elektrotauchlackbad in senkrechter Position eingetaucht und als Kathode geschaltet. Die Abscheidung der Lackfilme erfolgt während 2 Minuten bei ca. 350 Volt. Die Badtemperatur wird auf 29°C gehalten. Die abgeschiedenen Naßfilme werden mit entionisiertem Wasser abgespült. Danach werden die Lackfilme 20 Minuten lang bei 165°C eingebrannt. Der mit Hilfe des gemäß Punkt 5.2 hergestellten Elektrotauchlackbades beschichtete Prüfkörper zeigt im Vergleich zu dem mit Hilfe des gemäß Punkt 5.1 hergestellten Elektrotauchlackbades beschichteten Prüfkörper deutlich weniger störende Läufermarkierungen und eine stark verminderte Brückenbildung.

Zur Prüfung auf Wassertropfenempfindlichkeit wird je ein phosphatiertes Normprüfblech in das gemäß Punkt 5.1 bzw. in das gemäß Punkt 5.2 hergestellte Elektrotauchlackbad eingetaucht und als Kathode geschaltet. Die Abscheidung der Lackfilme erfolgt während 2 Minuten bei ca. 350 Volt. Die Badtemperatur wird auf 29°C gehalten. Die abgeschiedenen Naßfilme werden mit entionisiertem Wasser abgespült, 5 Minuten bei Raumtemperatur getrocknet und mit Wassertropfen aus entionisiertem Wasser versehen. Nach 5 Minuten Einwirkungszeit werden die Lackfilme 20 Minuten lang bei 165°C in waagerechter Stellung eingebrannt. Das mit Hilfe des gemäß Punkt 5.2. hergestellten Elektrotauchlackbades beschichtete Prüfblech weist im Vergleich zu dem mit Hilfe des gemäß Punkt 5.1 hergestellten Elektrotauchlackbades beschichteten Prüfblech deutlich weniger störende Wassertropfenmarkierungen auf.

## Patentansprüche

1. Verfahren Zur Herstellung von Kathodisch abscheidbaren, wäßrigen Elektrotauchlacken, die Teilchen aus Wachs, die einen Durchmesser von 1 bis 20 µm aufweisen, enthalten, **dadurch gekennzeichnet, daß** das Wachs mit Hilfe von Pigmentpasten in die wäßrigen Elektrotauchlacke eingearbeitet wird

2. Verfahren nach Anspruch 1, **dadurch gekennzeichnet, daß** die Teilchen aus Wachs aus einem gegebenenfalls modifizierten Polyolefin-Wachs bestehen.

3. Verfahren nach Anspruch 2, **dadurch gekennzeichnet, daß** die Teilchen aus Wachs aus einem gegebenenfalls modifizierten Polyethylenwachs bestehen.

4. Verfahren nach Anspruch 2, **dadurch gekennzeichnet, daß** die Teilchen aus Wachs aus einem gegebenenfalls modifizierten Polypropylenwachs bestehen.

## Claims

1. Process for preparing cathodically depositable, aqueous electrodeposition coating materials, which contain particles of wax having a diameter of from 1 to 20 *µ*m, **characterized in that** the wax is incorporated into the aqueous electrodeposition coating materials with the aid of pigment pastes.

2. Process according to Claim 1, **characterized in that** the particles of wax comprise a modified or unmodified polyolefin wax.

3. Process according to Claim 2, **characterized in that** the particles of wax comprise a modified or unmodified polyethylene wax.

4. Process according to Claim 2, **characterized in that** the particles of wax comprise a modified or unmodified polypropylene wax.

## Revendications

1. Procédé de fabrication de peintures électrophorétiques à l'eau pouvant être déposées par voie cathodique, qui contiennent des particules de cire ayant une granulométrie de 1 à 20 *µ*m, **caractérisé en ce que** la cire est incorporée dans les peintures électrophorétiques à l'eau à l'aide de pâtes pigmentaires.

2. Procédé selon la revendication 1, **caractérisé en ce que** les particules de cire sont constituées d'une cire de polyoléfine éventuellement modifiée.

3. Procédé selon la revendication 2, **caractérisé en ce que** les particules de cire sont constituées d'une cire de polyéthylène éventuellement modifiée.

4. Procédé selon la revendication 2, **caractérisé en ce que** les particules de cire sont constituées d'une cire de polypropylène éventuellement modifiée.
